# EUROPEAN PATENT SPECIFICATION

(11) **EP 3 845 000 B1**
(45) Date of publication and mention of the grant of the patent: **23.07.2025**
(21) Application number: 18931915.5
(22) Date of filing: 31.08.2018
(51) Int. Cl.: H04W 36/00, H04L 12/46, H04L 61/5038, H04L 61/5014, H04W 88/10, H04L 101/622

(54) **SYSTEMS AND METHODS FOR INTEGRATING LTE/5G ACCESS TRAFFIC INTO A DNA FABRIC OF A NETWORK**
SYSTEME UND VERFAHREN ZUR INTEGRATION VON LTE/5G-ZUGRIFFSVERKEHR IN EIN DNA-GEWEBE EINES NETZWERKS
SYSTÈMES ET PROCÉDÉS D'INTÉGRATION DE TRAFIC D'ACCÈS LTE/5G DANS UNE STRUCTURE DE DNA D'UN RÉSEAU

(43) Date of publication of application: 07.07.2021
(73) Proprietor: Cisco Technology, Inc., San Jose, CA 95134 (US)
(72) Inventor: PAZHYANNUR, Rajesh S., Fremont, CA 94539 (US); JAIN, Sudhir Kumar, Fremont, CA 94555 (US); ALI, Irfan, Palo Alto, CA 94306 (US)
(74) Representative: Jarrett, Daniel Phillip
(86) International application number: PCT/US2018/049164
(87) International publication number: WO 2020/046380

(56) References cited:
- EP-A1- 3 145 126
- EP-A1- 3 145 126
- EP-A1- 3 291 456
- EP-A1- 3 291 456
- WO-A1-2007/137069
- WO-A1-2013/043869
- WO-A1-2015/186281
- WO-A1-2015/200326
- WO-A1-2016/163808
- WO-A1-2018/102138
- WO-A2-2006/049457
- KR-A- 20090 121 938
- KR-B1- 101 065 121
- US-A1- 2012 129 525
- US-A1- 2013 083 773
- US-A1- 2015 350 989
- US-A1- 2015 372 874
- US-A1- 2016 080 981
- US-A1- 2016 205 128
- US-A1- 2017 066 034
- US-A1- 2017 215 122
- US-A1- 2017 289 873
- US-A1- 2018 109 998
- US-A1- 2018 124 630
- US-A1- 2018 124 630

## Description

### TECHNICAL FIELD

The present technology pertains in general to integrating LTE/5G capable access points into a Digital Network Architecture (DNA) fabric of an enterprise network for servicing enterprise associated devices.

### BACKGROUND

A DNA fabric is part of an enterprise network that enables a distributed data place with a centralized control plane. The enterprise network typically provides wireless access to associated devices, allows mobility across its entire wireless network and implements network connectivity measures such as integrated security policies, client traffic dependent security policies and/or network segmentation for client traffic through the enterprise network.

Currently deployed DNA fabric structures service wired and/or Wi-Fi traffic. However, if devices associated with an enterprise establishes a cellular connection using its associated cellular wireless service provider, there is currently no mechanism for the enterprise to apply its network connectivity measures to such devices. For example, if a mobile device establishes a Wi-Fi connection to the network enterprise, the DNA fabric of the enterprise can provide network access to the mobile device, implement network security measures and policies, etc. However, once the mobile device switches to using its cellular connection (LTE/5G interface, for example), the DNA fabric would be unable to track the mobile device, apply network security measures to the mobile device, etc. Furthermore, some enterprise network providers may build their own private LTE/5G network and integration of associated LTE/5G traffic with wired and/or Wi-Fi traffic through the DNA fabric is currently not possible.

KR20090121938A describes, according to a machine translation of its abstract, a mobile relay device with enhanced authentication and security functions and a packet data transceiving method using the same and a system thereof to enhance authentication and security without complexity based on intrinsic identification information of a terminal user connected to a mobile router.

EP3145126A1 describes, according to its abstract, a hybrid access gateway (HAG) apparatus for native bridged communication in a communication network, comprising: an upstream interface configured for receiving downlink Open Systems Interconnection (OSI) layer 2 traffic in said communication network; at least one downstream cellular coupling interface configured to be communicatively coupled to a user equipment (UE) represented by an OSI layer 2 address via a cellular access network (e.g. a Radio Access Network or RAN) of said communication network; an inspection module configured for inspecting an OSI layer 2 header of said received traffic; and a direction module configured for, based on said inspected OSI layer 2 header, directing said received traffic to said user equipment via said at least one downstream cellular coupling interface.

EP3291456A1 describes, according to its abstract, systems, devices, and configurations to implement trusted connections within wireless networks and associated devices and systems. In some examples, a wireless local area network (WLAN) may be attached to a 3GPP evolved packet core (EPC) as a trusted access network, without use of an evolved packet data gateway (ePDG) and overhead from related tunneling and encryption. Information to create the trusted attachment between a mobile device and a WLAN may be exchanged using Access Network Query Protocol (ANQP) extensions defined by IEEE standard 802.11u-2011, or using other protocols or standards such as DHCP or EAP. A trusted WLAN container with defined data structure fields may be transferred in the ANQP elements to exchange information used in the establishment and operation of the trusted attachment.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example network, according to an aspect of the present disclosure;
FIG. 2 illustrates an example of a fabric of network of FIG. 1, according to an aspect of the present disclosure;
FIG. 3A illustrates an example of an LTE packet core, according to an aspect of the present disclosure;
FIG. 3B illustrates an example of a 5G packet core, according to an aspect of the present disclosure;
FIG. 4A illustrates an example method of onboarding a LTE/5G device in the network of FIG. 1, according to an aspect of the present disclosure;
FIG. 4B illustrates an example method of managing active mobility of a LTE/5G device in the network of FIG. 1, according to an aspect of the present disclosure;
FIG. 4C illustrates an example method of managing idle mobility of a LTE/5G device in the network of FIG. 1. according to an aspect of the present disclosure;
FIG. 5 illustrates an example computing system architecture for use in network of FIG. 1, according to an aspect of the present disclosure: and
FIG. 6 illustrates an example network device suitable for performing switching, routing, load balancing, and other networking operations, according to an aspect of the present disclosure.

### DETAILED DESCRIPTION

The invention of the present European patent is set out in the appended claims.

Various example embodiments of the disclosure are discussed in detail below. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Disclosed are systems, methods, and computer-readable media for integrating LTE/5G capable access points into a DNA fabric of a network or any enterprise overlay management solution for servicing associated devices and more specifically for implementing procedures for managing LTF/5G traffic to and from LTE/5G devices via a DNA fabric of a network.

In one aspect of the present disclosure, an access point (AP) of a network, including memory having computer-readable instructions stored therein and one or more processors. The one or more processors are configured to execute the computer-readable instructions to generate a pseudo Media Access Control (MAC) address for a device attempting to establish a cellular connection via the access point based on a unique identifier of the device; obtain an Internet Protocol (IP) address for the device based on the pseudo MAC address, the IP address being used for tracking mobility of the device across the network; obtain a tag for the device from a network component associated with the network; and connect the device to the network using the IP address, the tag and the cellular connection of the device.

In one aspect of the present disclosure, a method includes generating, by an access point (AP) associated with a network, a pseudo MAC address for a device attempting to establish a cellular connection via the access point based on a unique identifier of the device: obtaining an IP address for the device based on the pseudo MAC address, the IP address being used for mobility of the device across the network; obtaining a tag for the device from a network component associated with the network; and connecting the device to the network using the IP address, the tag and the cellular connection of the device.

In one aspect of the present disclosure, one or more non-transitory computer-readable medium have computer-readable instruction stored thereon, which when executed by one or more processors, cause the one or more processors to generate a pseudo MAC address for a device attempting to establish a cellular connection via the access point based on a unique identifier of the device: obtain an IP address for the device based on the pseudo MAC address, the IP address being used for tracking mobility of the device across the network; obtain a tag for the device from a network component associated with the network; connect the device to the network using the IP address, the tag and the cellular connection of the device; and after connecting the device to the network, managing the mobility of the device across the network using one of a first method or a second method based on whether the device is in an active state or an idle state.

### DETAILED DESCRIPTION

The disclosed technology addresses the need in the art for integrating Long Term Evolution (LTE)/ Fifth Generation (5G) traffic into a Digital Network Architecture (DNA) fabric of a network (e.g., a wireless network). Such integration may be made possible by introducing access points into the DNA fabric that support both cellular (LTE and/or 5G) as well as Wi-Fi network connectivity. Throughout this disclosure, such access points may be referred to as dual mode APs and/or dual wireless connection APs.

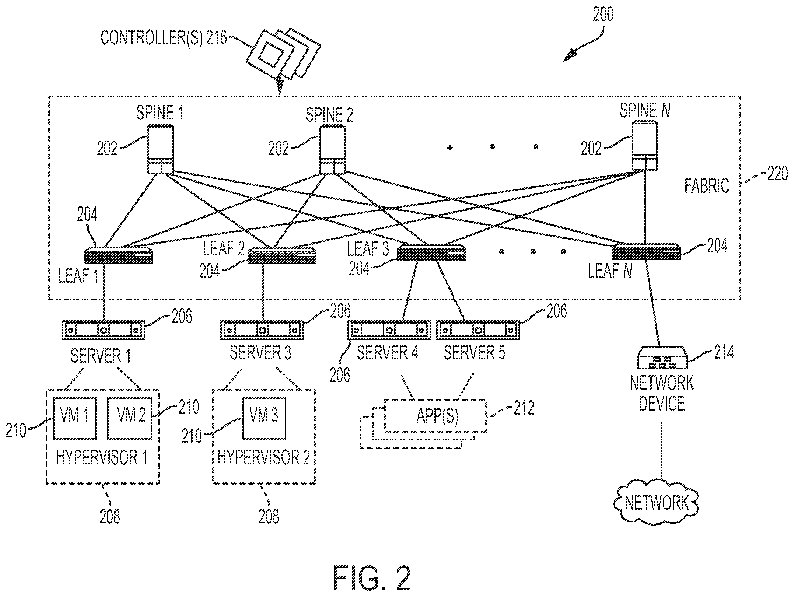

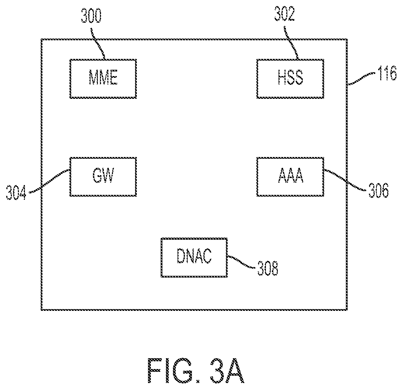

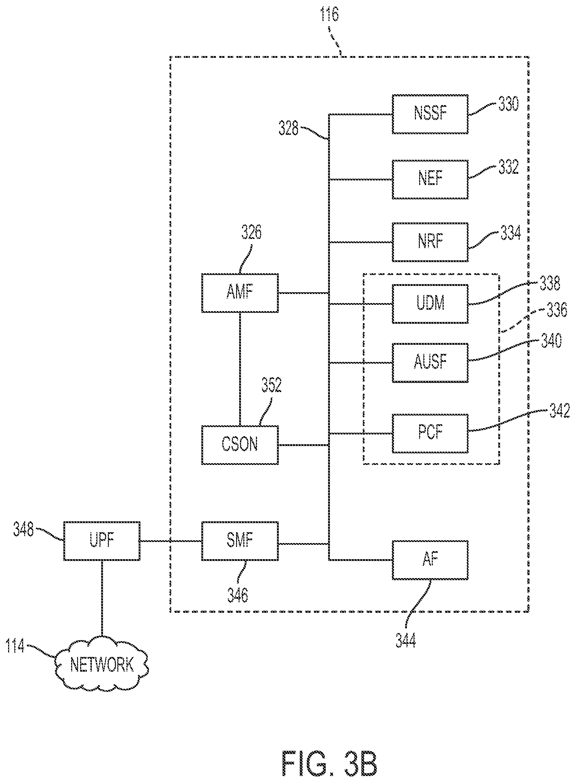

The disclosure begins with a description of an example network for integrating LTE/5G traffic into an enterprise network fabric and description of several components thereof with reference to FIGs. 2 and 3.

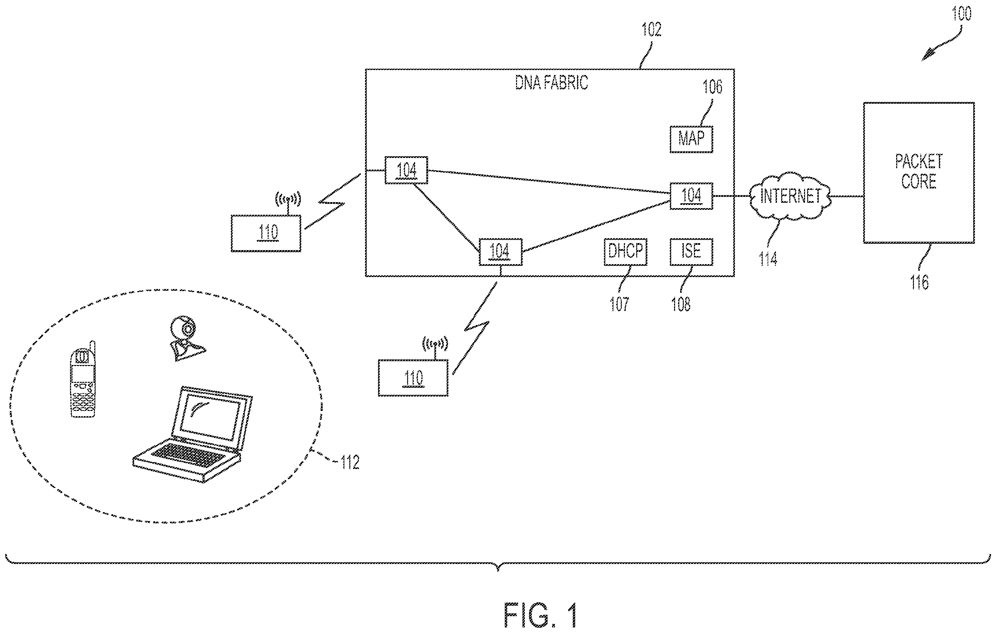

FIG. 1 illustrates an example network, according to an aspect of the present disclosure. As shown in FIG. 1, network 100 may be private enterprise network that includes a DNA fabric 102 or simply fabric 102. While fabric 102 will be described in detail with reference to FIG. 2, it can be formed of one or more edge nodes 104 (which may be also referred to as Locator/ID Separator Protocol (LISP) tunnel routers or xTRs 104), a mapping server 106 (MAP server 106), a Dynamic Host Configuration Protocol (DHCP) server 107 and an Identity Service Engine (ISE) 108. Edge nodes 104 will be further described below with reference to FIG. 2. MAP server 106 can record locator information (e.g., IP addresses) of connected devices and provide them to a requesting entity. MAP server 106 can be used to track mobility and movement of connected devices across enterprise network 100. DHCP server 107 may be a network server that provides and assigns IP addresses, default gateways and other network parameters to connected devices such as loTs 112. ISE 108 can be used for implementing network security policies across enterprise network 100. ISE 108 can communicate network policies to ToTs 112 in the form of a Virtual Network ID (VNID) or a Security Group Tag (SGT).

While fabric 102 is shown as having edge nodes 104, MAP server 106. DHCP server 107 and ISE 108, components of fabric 102 are not limited thereto and may include any other component necessary and/or ordinary to fabric 102's intended use and operation.

Network 100 can include one or more access points (APs) 110. For purposes of the present disclosure, it is assumed that each of APs 110 can be a LTE and/or a 5G small cell. In one example, such APs 110 can have integrated Wi-Fi capabilities (and thus can be referred to as dual mode APs) that supports both cellular wireless connectivity and Wi-Fi connectivity to devices connected thereto. However, network 100 can also have Wi-Fi only APs. APs 110 can be any known or to be developed AP having LTE/5G and Wi-Fi integrated capabilities such as those designed and manufactured by Cisco Technology, Inc. of San Jose, CA.

Network 100 can also include multiple mobile devices associated therewith. Such mobile devices can include any known or to be developed mobile phones, tablets, laptop computers, various wireless capable sensors, etc., and thus are collectively referred to as Internet of Things (IoT) devices 112 in FIG. 1.

Within network 100, fabric 102 (or in other words components thereof) can communicate with a 4G/LTE and/or a 5G packet core 116. For example, if some of APs 110 are LTE and Wi-Fi integrated APs and other ones are 5G and Wi-Fi integrated APs, then fabric 102 communicates with both a 4G/LTE packet core and a 5G packet core, each of which will be further described below with reference to FIGs. 3A and 3B, respectively. Communication between fabric 102 components and packet core 116 can be through internet 114.

FIG. 2 illustrates an example of a fabric of network of FIG. 1, according to an aspect of the present disclosure. In some examples, Network Environment 200 can include a Fabric 220 which can represent the physical layer or infrastructure (e.g., underlay) of the Network Environment 200. Fabric 220 is an example of Fabric 102 of FIG. 1. Fabric 220 can include Spines 202 (e.g., spine routers or switches) and Leafs 204 (e.g., leaf routers or switches, which can be the same as xTRs 104 of FIG. 1) which can be interconnected for routing or switching traffic in the Fabric 220. Spines 202 can interconnect Leafs 204 in the Fabric 220. and Leafs 204 can connect the Fabric 220 to an overlay or logical portion of the Network Environment 200, which can include application services, servers, virtual machines, containers, endpoints, etc. Thus, network connectivity in the Fabric 220 can flow from Spines 202 to Leafs 204, and vice versa. The interconnections between Leafs 204 and Spines 202 can be redundant (e.g., multiple interconnections) to avoid a failure in routing. In some examples, Leafs 204 and Spines 202 can be fully connected, such that any given Leaf is connected to each of the Spines 202. and any given Spine is connected to each of the Leafs 204. Leafs 204 can be, for example, top-of-rack ("ToR") switches, aggregation switches, gateways, ingress and/or egress switches, provider edge devices, and/or any other type of routing or switching device.

Leafs 204 can be responsible for routing and/or bridging tenant or customer packets and applying network policies or rules. Network policies and rules can be driven by one or more Controllers 216 (which can be the same as ISE 108 of FIG. 1), and/or implemented or enforced by one or more devices, such as Leafs 204. Leafs 204 can connect other elements to the Fabric 220. For example, Leafs 204 can connect Servers 206. Hypervisors 208. Virtual Machines (VMs) 210, Applications 212, Network Device 214, etc., with Fabric 220. Network device 214 can be the same as one of APs 110 having integrated Wi-Fi and LTE/5G capabilities, which can connect IoT devices 112 to fabric 220, packet core 116, etc. Such elements can reside in one or more logical or virtual layers or networks, such as an overlay network. In some cases, Leafs 204 can encapsulate and decapsulate packets to and from such elements (e.g., Servers 206) in order to enable communications throughout Network Environment 200 and Fabric 220. Leafs 204 can also provide any other devices, services, tenants, or workloads with access to Fabric 220.

Applications 212 can include software applications, services, containers, appliances, functions, service chains, etc. For example, Applications 212 can include a firewall, a database, a CDN server, an IDS/IPS, a deep packet inspection service, a message router, a virtual switch, etc. An application from Applications 212 can be distributed, chained, or hosted by multiple endpoints (e.g., Servers 206. VMs 210, etc.), or may run or execute entirely from a single endpoint.

VMs 210 can be virtual machines hosted by Hypervisors 208 or virtual machine managers running on Servers 206. VMs 210 can include workloads running on a guest operating system on a respective server. Hypervisors 208 can provide a layer of software, firmware, and/or hardware that creates, manages, and/or runs the VMs 210. Hypervisors 208 can allow VMs 210 to share hardware resources on Servers 206. and the hardware resources on Servers 206 to appear as multiple, separate hardware platforms. Moreover, Hypervisors 208 on Servers 206 can host one or more VMs 210.

Configurations in Network Environment 200 can be implemented at a logical level, a hardware level (e.g.. physical), and/or both. Such configurations can define rules, policies, priorities, protocols, attributes, objects, etc., for routing and/or classifying traffic in Network Environment 200. For example, such configurations can define attributes and objects for classifying and processing traffic based on Endpoint Groups (EPGs), Security Groups (SGs), VM types, bridge domains (BDs), virtual routing and forwarding instances (VRFs), tenants, priorities, firewall rules, etc. Other example network objects and configurations are further described below. Traffic policies and rules can be enforced based on tags, attributes, or other characteristics of the traffic, such as protocols associated with the traffic, EPGs associated with the traffic, SGs associated with the traffic, network address information associated with the traffic, etc. Such policies and rules can be enforced by one or more elements in Network Environment 200. such as Leafs 204, Servers 206, Hypervisors 208. Controllers 216, etc. As previously explained, Network Environment 200 can be configured according to one or more particular softwaredefined network (SDN) solutions, such as, but not limited to, CISCO ACI or VMWARE NSX.

FIG. 3A illustrates an example of an LTE packet core, according to an aspect of the present disclosure.

Packet core 116 of FIG. 3A can include one or more components for registering devices (e.g., a mobile device that can be one of IoTs 112) with a corresponding cellular network, when the mobile and the associated AP 110 is a LTE small cell with integrated Wi-Fi capabilities. These components include, but are not limited to. Mobility Management Entity (MME) 300, Home Subscriber Server (HSS) 302, Serving Gateway, Packet Data Network Gateway 304 (SGW/PGW, which may collectively be referred to as GW 304), Authentication, Authorization and Accounting (AAA) component 306, a Dynamic Network Access Control (DNAC) component 308 for managing LTE/5G APs, and/or any other known, or to be developed, component that is part of core network 116 for routine functioning of a 4G/LTE packet core. Functionalities of MME 300, HSS 302, GW 304 and AAA 306 are known to those skilled in the art and for the sake of brevity, will be omitted.

FIG. 3B illustrates an example of a 50 packet core, according to an aspect of the present disclosure. In example of FIG. 3B, core network 116 is a 5G core network having logical components. Example components include various network functions implemented via one or more dedicated and/or distributed servers (can be cloud based). 5G core network 116 can be highly flexible, modular and scalable. It can include many functions including network slicing. It offers distributed cloud-based functionalities. Network functions virtualization (NFV) and Software Defined Networking (SDN).

For example and as shown in FIG. 3B, core network 116 has Application and Mobility Management Function (AMF) 326 and bus 328 connecting various servers providing different example functionalities. For example, bus 128 can connect AMF 326 to Network Slice Selection Function (NSSF) 330, Network Exposure Function (NEF) 332, Network Repository Function (NRF) 334, Unified Data Control (UDC) 336, which itself can include example functions including Unified Data Management (UDM) 336, Authentication Server Function (AUSF) 340, Policy Control Function (PCF) 342, Application Function (AF) 344 and Session Management Function (SMF) 346. Various components of core network 116, examples of which are described above, provide known or to be developed functionalities for operation of 5G networks including, but not limited to, device registration, attachment and authentication, implementing network policies, billing policies, etc.

Furthermore, as shown in FIG. 3B, SMF 346 is connected to User Plane Function (UPF) 348. which in turns connects core network 114 and one or more of IoTs 112 via network 114.

While FIG. 3B illustrates an example structure and components of core network 116, the present disclosure is not limited thereto. Core network 116 can include any other number of known or to be developed logical functions and components and/or can have other known or to be developed architecture.

Furthermore, core network 116 can have a centralized Self Organizing Network (CSON) function/server 352 connected to AMF 326. CSON server 352 can have a dedicated server for performing functionalities thereof (e.g., management of device registrations, load balancing, integrated access backhaul, etc.).

Having described various examples of network 100 and one or more elements thereof with reference to FIGs. 1-3, the disclosure now turns to describing example embodiments directed to managing client/device (e.g., one or more of IoTs 112) onboarding, mobility while active and mobility while idle scenarios.

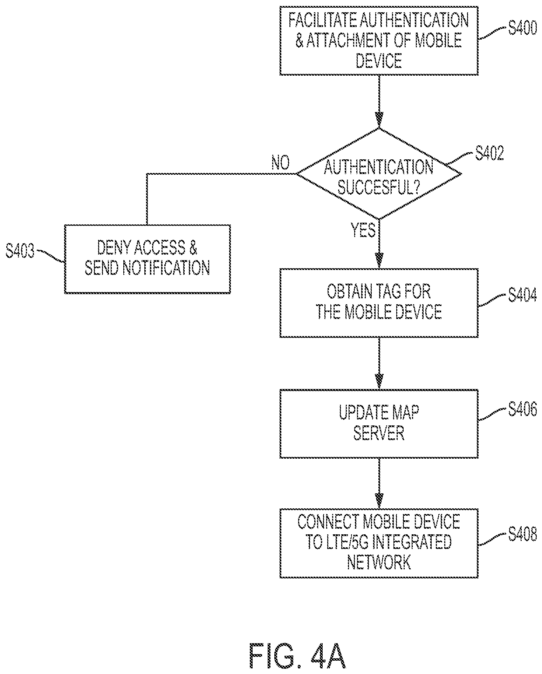

FIGs. 4A through 4C illustrate methods of traffic management in a LTE/5G integrated enterprise network; according to an aspect of the present disclosure. FIGs. 4A-C will be described from the perspective of any one of LTE/5G APs 110. While FIGs. 4A-C is described from the perspective of an LTE/5G AP, it will be understood that such AP has one or more processors that are configured to execute computer-readable instructions stored on one or more associated memories to perform functionalities described with reference to FIGs. 4A-C. Furthermore, with reference to FIGs. 4A-C, a mobile device as an example of IoTs 112 will be used for reference that may join network 100, move across network 100 while active or move across network 100 while idle. Such mobile device is assumed to be capable of establishing both a cellular connection (LTE and/or 5G connection) with core network 116 and a Wi-Fi (or any other wireless based connection) to network 100 via fabric 102.

FIG. 4A illustrates an example method of onboarding a LTE/5G device in the network of FIG. 1, according to an aspect of the present disclosure. Per FIG. 4A, at S400, AP 110 facilitates authentication and attachment of a mobile device to core network 116 (establishes a connection between the mobile device and core network 116). This authentication and attachment procedure may be performed with appropriate components of core network 116 such as with MME 300 and/or HSS 302 of core network 116 (for LTE cases) and/or AMF 326 (for 5G cases). As part of this facilitation at S400, AP 110 also provides its own IP address to core network 116 such that MME 300, for example, may select AP 110 as mobile device's local gateway for the mobile device's Packet Data Network (PDN) connection.

Furthermore, At S400, AP 110 generates a pseudo MAC address for the mobile device in order to obtain an IP address for the mobile device. An LTE/5G device does not have an IP address and thus the pseudo MAC address will be used to obtain an IP address the mobile device from DHCP server 107. The DHCP server may be part of fabric 102 or core network 116. In one example, the pseudo MAC address will be generated using any known or to be developed method including, but not limited to using identity unique to the mobile device, which maybe the International Mobile Subscriber Identity (IMSI) or Globally Unique Temporary Identity (GUTI), or based on pseudo-MAC ranges that are made available to the AP 110 (e.g., based on configuration from the DNAC). Once the mobile device is authenticated, the MME 300/AMF 326 may provide the mobile device's permanent identity (which may be the IMSI or the IMEI of the mobile device) to the AP 110, which enables the AP 100 to generate the pseudo-MAC address for the mobile device.

At S402, AP 110 determines if the authentication and attachment process of S400 for the mobile device has been successful. If not, the process ends at S403 and optionally a corresponding notification may be generated and sent to the mobile device by AP 110.

If successful, then at S404, AP 110 obtains a tag for the mobile device from ISE 108. The tag may include information indicative of the fact that the mobile device is a LTE and/or a 5G device for security classifications and designation. Therefore, it may be referred to as a security tag as well.

Thereafter, at S406, AP 110 updates MAP server 106 of fabric 102 with the IP address and/or the tag for the mobile device. In one example, updating MAP server 106 may be performed using L2/L3 tunneling. In one example, there may be other instances where AP 110 updates MAP server 106. For example, when AP 110 times out or when the mobile device leaves network 100. AP 110 updates MAP server 106 to remove mobile device's entry from its record.

Thereafter, at S408, AP 110 connects the mobile device to fabric 102/network 100, on which the mobile device can roam using its cellular connection, the assigned IP address and the tag. Accordingly, cellular traffic of the mobile device can be integrated into fabric 102 of network 100, turning network 100 into a LTE/5G integrated enterprise network.

At this point, the mobile device can roam on network 100 using it's LTE/5G connection while fabric 102 can implement its security measures to the mobile device since it is aware of the presence of the LTE/5G mobile device through MAP server 106.

Having described examples for onboarding a mobile device onto a LTE/5G integrated network, hereinafter examples will be described for handling mobility of the mobile device across network 100 while the mobile device is active. For example, an active mobile device may switch roaming from one AP 110 (source AP) to another AP 110 (destination AP). In this scenario, it is assumed that the source AP 110 has the IP address and the tag obtained for the mobile per the process of FIG. 4A.

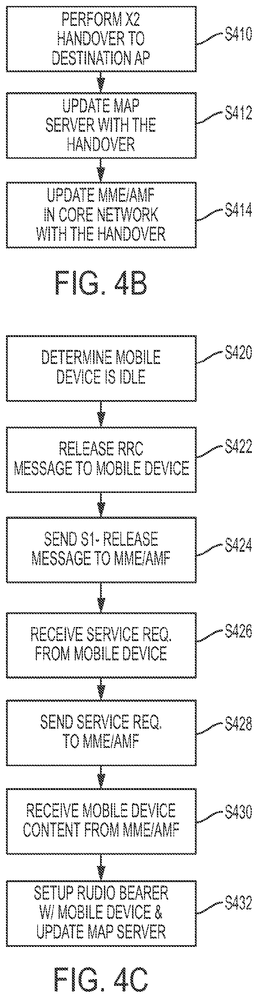

FIG. 4B illustrates an example method of managing active mobility of a LTE/5G device in the network of FIG. 1. according to an aspect of the present disclosure. Per FIG. 4B, at S410, source AP 110 performs a handover process for handing the mobile device to a new AP 110 (destination AP). This handover process can be an X2 handover process. As part of this X2 handover, source AP 110 sends the tag for the mobile device to the destination AP 110 as well as mobile device's IP address and any other additional context.

At S412, destination AP 110 updates MAP server 106 with the handover process to indicate that the mobile device now roams on destination AP 110.

At S414, destination AP 110 also updates MME 300 (for LTE cases) or AMF 326 (for 5G cases) in packet core 116 to indicate that the mobile device has moved to the destination AP 110. In one example, updating MME 300 (or AMF 326) may be performed because any subsequent move of the mobile device from the destination AP 110 to another AP depends on information provided by MME 300 (or AMF 326) to the destination AP 110.

FIG. 4B describes handling mobility of active mobile devices across LTE/5G integrated networks. FIG. 4C illustrates an example method of managing idle mobility of a LTF/5G device in the network of FIG. 1, according to an aspect of the present disclosure. In describing FIG. 4C, references will be made to old AP 110 and new AP 110. Old AP 110 may refer to the last AP 110 within network 100 on which the mobile device transitioned from an active state to an idle state, while the new AP 110 may refer to a current/latest AP 110 on which the mobile device has transitioned from the idle state back to the active state.

Per FIG. 4C. at S420, old AP 110 determines if the mobile device is idle. In one example, old AP 110 (which is the one currently serving the mobile device) determines if there has been no data exchange with the mobile device for a threshold period of time. The threshold period of time is a configurable parameter that may be determined based on experiments and/or empirical studies. If such threshold period of time has passed since last data exchange with the mobile device, old AP 110 determines that the mobile device is idle.

Upon determining that old AP 110 is idle at S420, at S422, old AP 110 releases a Radio Resource Control (RRC) message to the mobile device.

At S424, old AP 110 sends a S1-release message to MME 300 (or AMF 326). At S424. old AP 110 may release, as part of the S1-release message, mobile device's IP address, tag (described with reference to FIG. 4A) and mobile device's pseudo MAC address to MME 300 (or AMF 326). In one example, old AP 110 does not update MAP server 126 at this stage.

Thereafter, the mobile device may transition to an active state by sending a packet. However, the mobile device sends this service request to a new AP 110, which is indicative that the mobile device has moved from being served by old AP 110 to new AP 110.

At S426, new AP 110 receives a service request from the mobile device to transition to an active state.

At S428, new AP 110 sends the service request to MME 300 (or AMF 326) at core network 116.

At S430, new AP 110, receives from MME 300 (or AMF 326) the mobile device's context including, but not limited to, the mobile device's IP address, tag and Ethernet address (received from old AP at S424).

Using the received context, at S432, new AP 110 setups data radio bearers to the mobile device to set up mobile device's PDN connection for connecting the mobile device to network 100 and also updates MAP server 106 to reflect that the mobile device has moved to new AP 110.

In describing S426 to S432, reference was made to a mobile device initiated transition from idle mode (idle state) to active mode (active state). However, in another example, the transition may be network based. In such case downlink packet may be received to old AP 110. In response, old AP 110 may send a "downlink data notification" to MME 300 (or AMF 326). In response, MME 300 (or AMF 326) may page to APs 110 in network 100 and associated with fabric 102 (assuming that the Tracking area ID of all APs 110 associated with fabric 102) is the same. Thereafter, the mobile device may respond to new AP 110, in response to which the new AP 110 sets up the radio bears and updates MAP server 106, per S432.

In describing FIGs. 4A-C. and for situations involving mobility of a mobile device within network 100, at least two APs 110 are involved. However, in an alternative example, fabric 102 may include a "centralized controller" that carries out functionalities described above with reference to FIGs. 4A-C for managing all aspects of a device mobility (onboarding, mobility while active and mobility while idle) within LTE/5G integrated fabric 102 of network 100.

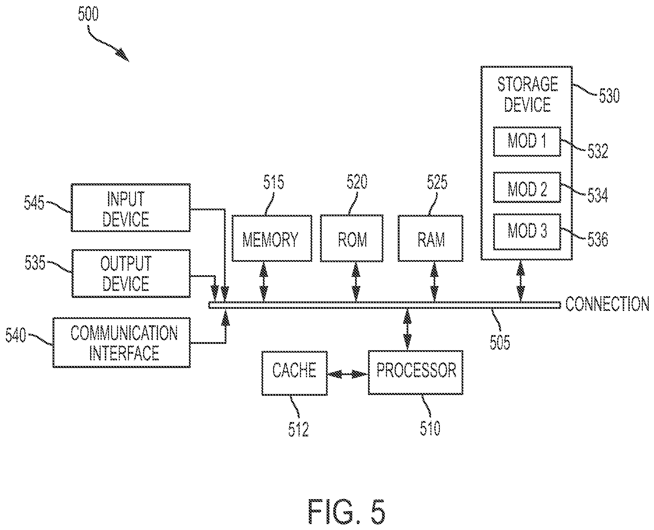

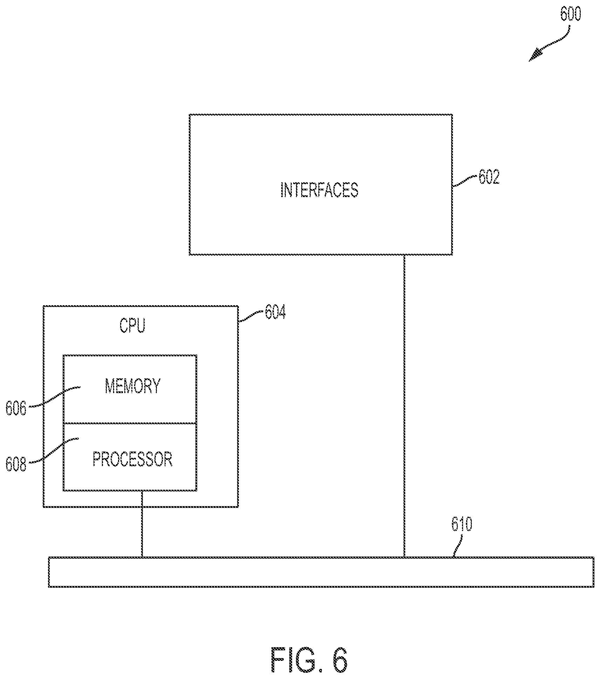

The disclosure now turns to FIGs. 5 and 6, which illustrate example network devices and computing devices that may be implemented as one or more components of network 100 described above including, but not limited to, any one of APs 110, MAP server 106. MME 300, etc.

FIG. 5 illustrates computing system architecture for use in network of FIG. 1, according to an aspect of the present disclosure. Computing system architecture 500 has components that are in electrical communication with each other using a connection 505, such as a bus. Exemplary system 500 includes a processing unit (CPU or processor) 510 and a system connection 505 that couples various system components including the system memory 515, such as read only memory (ROM) 520 and random access memory (RAM) 525, to the processor 510. The system 500 can include a cache of high-speed memory connected directly with, in close proximity to, or integrated as part of the processor 510. The system 500 can copy data from the memory 515 and/or the storage device 530 to the cache 512 for quick access by the processor 510. In this way, the cache can provide a performance boost that avoids processor 510 delays while waiting for data. These and other modules can control or be configured to control the processor 510 to perform various actions. Other system memory 515 may be available for use as well. The memory 515 can include multiple different types of memory with different performance characteristics. The processor 510 can include any general purpose processor and a hardware or software service, such as service 1 532, service 2 534. and service 3 536 stored in storage device 530. configured to control the processor 510 as well as a special-purpose processor where software instructions are incorporated into the actual processor design. The processor 510 may be a completely self-contained computing system, containing multiple cores or processors, a bus, memory controller, cache, etc. A multi-core processor may be symmetric or asymmetric.

To enable user interaction with the computing device 300, an input device 545 can represent any number of input mechanisms, such as a microphone for speech. a touch-sensitive screen for gesture or graphical input, keyboard, mouse, motion input. speech and so forth. An output device 535 can also be one or more of a number of output mechanisms known to those of skill in the art. In some instances, multimodal systems can enable a user to provide multiple types of input to communicate with the computing device 500. The communications interface 540 can generally govern and manage the user input and system output. There is no restriction on operating on any particular hardware arrangement and therefore the basic features here may easily be substituted for improved hardware or firmware arrangements as they are developed.

Storage device 530 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 525, read only memory (ROM) 520, and hybrids thereof.

The storage device 530 can include services 532, 534, 536 for controlling the processor 510. Other hardware or software modules are contemplated. The storage device 530 can be connected to the system connection 505. In one aspect. a hardware module that performs a particular function can include the software component stored in a computer-readable medium in connection with the necessary hardware components, such as the processor 510. connection 505, output device 535, and so forth. to carry out the function.

FIG. 6 illustrates an example network device suitable for performing switching, routing. load balancing, and other networking operations, according to an aspect of the present disclosure. Network device 600 includes a central processing unit (CPU) 604, interfaces 602, and a bus 610 (e.g., a PCI bus). When acting under the control of appropriate software or firmware, the CPU 604 is responsible for executing packet management. error detection, and/or routing functions. The CPU 604 preferably accomplishes all these functions under the control of software including an operating system and any appropriate applications software. CPU 604 may include one or more processors 608, such as a processor from the INTEL X86 family of microprocessors. In some cases. processor 608 can be specially designed hardware for controlling the operations of network device 600. In some cases, a memory 606 (e.g.. non-volatile RAM. ROM, etc.) also forms part of CPU 604. However, there are many different ways in which memory could be coupled to the system.

The interfaces 602 are typically provided as modular interface cards (sometimes referred to as "line cards"). Generally, they control the sending and receiving of data packets over the network and sometimes support other peripherals used with the network device 600. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces. Ethernet interfaces. Gigabit Ethernet interfaces, ATM interfaces, HSSI interfaces, POS interfaces, FDDI interfaces, Wi-Fi interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the master microprocessor 604 to efficiently perform routing computations, network diagnostics, security functions, etc.

Although the system shown in FIG. 6 is one specific network device of the present invention, it is by no means the only network device architecture on which the present invention can be implemented. For example, an architecture having a single processor that handles communications as well as routing computations, etc., is often used. Further, other types of interfaces and media could also be used with the network device 600.

Regardless of the network device's configuration, it may employ one or more memories or memory modules (including memory 606) contigured to store program instructions for the general-purpose network operations and mechanisms for roaming. route optimization and routing functions described herein. The program instructions may control the operation of an operating system and/or one or more applications. for example. The memory or memories may also be configured to store tables such as mobility binding, registration, and association tables, etc. Memory 606 could also hold various software containers and virtualized execution environments and data.

The network device 600 can also include an application-specific integrated circuit (ASIC), which can be configured to perform routing and/or switching operations. The ASIC can communicate with other components in the network device 600 via the bus 610, to exchange data and signals and coordinate various types of operations by the network device 600, such as routing, switching, and/or data storage operations, for example.

For clarity of explanation, in some instances the present technology may be presented as including individual functional blocks including functional blocks comprising devices, device components. steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example. claim language reciting "at least one of A and B" means A, **B,** or A and B.

## Claims

1. An access point (110), AP, of a network (100), the AP being configured to provide cellular connection and Wi-Fi connection capabilities for a device (112) and configured to:
generate (S400) a pseudo Media Access Control, MAC, address for the device, which has established a Wi-Fi connection to the network and is attempting to establish a cellular connection to a core network (116) via the access point, based on a unique identifier of the device;
obtain (S400), from a Dynamic Host Configuration Protocol, DHCP, server (107) of a Digital Network Architecture, DNA, fabric (102) of the network, an Internet Protocol, IP, address for the device based on the pseudo MAC address, the IP address being used for tracking mobility of the device across the network;
obtain (S404), from an Identity Service Engine (108), ISE, of the DNA fabric of the network, a security tag for the device, wherein the security tag is for applying one or more security configurations of the network to the device while the device is using the cellular connection;
update (S406) a mapping server (106) of the DNA fabric of the network with the IP address and/or the tag for the device; and
connect (S408) the device to the DNA fabric of the network using the IP address, the security tag and the cellular connection of the device and allow the device to roam on the network using the cellular connection while the DNA fabric implements its security measures to the device,wherein the DNA fabric is part of an enterprise network that enables a distributed data place with a centralized control plane.

2. The access point of claim 1, wherein the access point is configured to integrate cellular traffic of the device into the network.

3. The access point of any preceding claim, further configured to manage mobility of the device across the network based on whether the device is in an active state or in an idle state.

4. The access point of claim 3, wherein when the device is in the active state, the managing includes:
performing (S410) a handover process to handover the device from the AP to a destination AP, the handover including sending the security tag, the IP address and an Ethernet address of the mobile from the AP to the destination AP; and
updating (S414) one of a mobility management entity (300), MME, or a mobility management function (326), AMF, component in a corresponding cellular packet core to indicate the handover.

5. The access point of claim 3, wherein when the device is in the idle state, the managing includes:
sending (S424), to one of a mobility management entity (300), MME, or a mobility management function (326), AMF, component in a corresponding cellular packet core, a S1-release message including the pseudo MAC address of the device, the IP address of the device and the security tag of the device, wherein
the S1-release message causes the one of the MME or the AMF component to send (S430) a message to a second AP after the device transitions back to the active state, the message including the pseudo MAC address of the device, the IP address of the device and the security tag of the device, and
the AP is an AP on which the device last transitioned from the active state to the idle state and the second AP is another AP on which the device transitioned from the idle state back to the active state.

6. A system comprising the access point of claim 5 and the second AP, wherein:
the second AP is configured to receive (S430) the message from the one of the MME or the AMF component when the second AP receives (S426) a service request from the device and forwards (S428) the service request to the one of the MME or the AMF component after the device transitioned back to the active state; or
the second AP is configured to receive the message from the one of the MME or the AMF component, when the one of the MME or the AMF component receives a downlink data notification from the AP indicative of the transition of the device from the idle state back to the active state.

7. A method comprising, at an access point (110), AP, of a network (100), the AP being configured to provide cellular connection and Wi-Fi connection capabilities for a device (112):
generating (S400) a pseudo Media Access Control, MAC, address for the device, which has established a Wi-Fi connection to the network and is attempting to establish a cellular connection to a core network (116) via the access point, based on a unique identifier of the device;
obtaining (S400), from a Dynamic Host Configuration Protocol, DHCP, server (107) of a Digital Network Architecture, DNA, fabric (102) of the network, an Internet Protocol, IP, address for the device based on the pseudo MAC address, the IP address being used for mobility of the device across the network;
obtaining (S404), from an Identity Service Engine (108), ISE, of the DNA fabric of the network, a security tag for the device, wherein the security tag is for applying one or more security configurations of the network to the device while the device is using the cellular connection;
updating (S406) a mapping server (106) of the DNA fabric of the network with the IP address and/or the tag for the device; and
connecting (S408) the device to the DNA fabric of the network using the IP address, the security tag and the cellular connection of the device and allow the device to roam on the network using the cellular connection while the DNA fabric implements its security measures to the device,
wherein the DNA fabric is part of an enterprise network that enables a distributed data place with a centralized control plane.

8. The method of claim 7, further comprising:
managing mobility of the device across the network.

9. The method of claim 8, further comprising:
implementing one of a first process or a second process for managing the mobility of the device across the network based on whether the device is in an active state or in an idle state.

10. The method of claim 9, wherein when the device is in the active state, the first process includes:
performing a handover process to handover the device from a source AP to a destination AP, the handover including sending the security tag from the source AP to the destination AP; and
updating, by the destination AP, a component in a packet core of a cellular provider providing the cellular connection for the device to indicate the handover,
optionally wherein the component in the packet core is one of a mobility management entity (300), MME, or a mobility management function (326), AMF, component.

11. The method of claim 9, wherein when the device is in the idle state, the second process includes:
sending, by a first AP and to a component in a packet core of a cellular provider providing the cellular connection for the device, a S1-release message including the pseudo MAC address of the device, the IP address of the device and the security tag of the device; and
receiving, by a second AP and from the component in a packet core, a message including the pseudo MAC address of the device, the IP address of the device and the security tag of the device, wherein
the first AP is an AP on which the device transitioned from the active state to the idle state and the second AP is another AP on which the device transitioned from the idle state back to the active state,
optionally wherein the component in the packet core is one of a mobility management entity (300), MME, or a mobility management function (326), AMF, component.

12. The method of claim 11, wherein:
the second AP receives the message from the component in the packet core when the second AP receives a service request from the device after the device transitions back to the active state; or
the second AP receives the message from the component in the packet core when the component in the packet core receives downlink data notification from the first AP indicative of the transition of the device from the idle state back to the active state.

13. One or more computer-readable medium having computer-readable instructions stored therein, which when executed by one or more processors, cause the one or more processors to perform the method of any of claims 7 to 12.

## Patentansprüche

1. Ein Zugangspunkt (110), AP, eines Netzwerks (100), wobei der Zugangspunkt dafür konfiguriert ist, einem Gerät (112) zellulare Verbindungs- und Wi-Fi-Verbindungsfähigkeiten bereitzustellen und konfiguriert ist,
(S400) eine Pseudo-Media-Access-Control-, MAC, -Adresse für das Gerät zu erzeugen, das bereits eine Wi-Fi-Verbindung zum Netzwerk aufgebaut hat und über den Zugangspunkt eine zellulare Verbindung zu einem Kernnetz (116) herstellen will, basierend auf einem eindeutigen Bezeichner des Geräts;
(S400) von einem Dynamic-Host-Configuration-Protocol-, DHCP, -Server (107) eines Digital-Network-Architecture-, DNA, -Fabrics (102) des Netzwerks eine Internet-Protocol-, IP, -Adresse für das Gerät auf Grundlage der Pseudo-MAC-Adresse zu erhalten, wobei die IP-Adresse zur Nachverfolgung der Mobilität des Geräts im Netzwerk verwendet wird;
(S404) von einer Identity Service Engine (108), ISE, des DNA-Fabrics des Netzwerks einen Sicherheitstag für das Gerät zu erhalten, wobei der Sicherheitstag dazu dient, dem Gerät während der Nutzung der zellularen Verbindung eine oder mehrere Sicherheitskonfigurationen des Netzwerks zuzuweisen;
(S406) einen Mapping-Server (106) des DNA-Fabrics des Netzwerks mit der IP-Adresse und/oder dem Sicherheitstag des Geräts zu aktualisieren; und
(S408) das Gerät mithilfe der IP-Adresse, des Sicherheitstags und der zellularen Verbindung des Geräts mit dem DNA-Fabric des Netzwerks zu verbinden und dem Gerät zu gestatten, über die zellulare Verbindung im Netzwerk zu roamen, während das DNA-Fabric seine Sicherheitsmaßnahmen auf das Gerät anwendet, wobei das DNA-Fabric Teil eines Unternehmensnetzes ist, das einen verteilten Datenbereich mit einer zentralisierten Steuerungsebene ermöglicht.

2. Der Zugangspunkt nach Anspruch 1, wobei der Zugangspunkt dafür konfiguriert ist, den zellularen Datenverkehr des Geräts in das Netzwerk zu integrieren.

3. Der Zugangspunkt nach einem der vorhergehenden Ansprüche, ferner konfiguriert, die Mobilität des Geräts im Netzwerk abhängig davon zu verwalten, ob sich das Gerät in einem aktiven Zustand oder in einem Idle-Zustand befindet.

4. Der Zugangspunkt nach Anspruch 3, wobei, wenn sich das Gerät im aktiven Zustand befindet, die Verwaltung Folgendes umfasst:
(S410) Durchführen eines Handover-Prozesses, um das Gerät vom AP auf einen Ziel-AP zu übergeben, wobei das Handover das Senden des Sicherheitstags, der IP-Adresse und einer Ethernet-Adresse des Geräts vom AP an den Ziel-AP umfasst; und
(S414) Aktualisieren einer Mobility-Management-Entity (300), MME, oder einer Mobility-Management-Function (326), AMF, in einem entsprechenden zellularen Packet-Core, um die Übergabe anzuzeigen.

5. Der Zugangspunkt nach Anspruch 3, wobei, wenn sich das Gerät im Idle-Zustand befindet, die Verwaltung Folgendes umfasst:
(S424) Senden einer SI-Release-Nachricht von einem der MME- bzw. AMF-Komponenten im entsprechenden zellularen Packet-Core, wobei die SI-Release-Nachricht die Pseudo-MAC-Adresse, die IP-Adresse und den Sicherheitstag des Geräts enthält;
wobei die SI-Release-Nachricht bewirkt, dass die MME- bzw. AMF-Komponente (S430) nach dem erneuten Übergang des Geräts in den aktiven Zustand eine Nachricht an einen zweiten AP sendet, die die Pseudo-MAC-Adresse, die IP-Adresse und den Sicherheitstag des Geräts enthält, und
der AP derjenige AP ist, auf dem das Gerät zuletzt vom aktiven in den Idle-Zustand überging, und der zweite AP ein anderer AP ist, auf dem das Gerät vom Idle- in den aktiven Zustand zurückwechselte.

6. Ein System, das den Zugangspunkt nach Anspruch 5 und den zweiten AP aufweist, wobei:
der zweite AP (S430) die Nachricht von der MME- bzw. AMF-Komponente empfängt, wenn er (S426) eine Service-Request-Nachricht vom Gerät erhält und diese (S428) nach dem erneuten Übergang des Geräts in den aktiven Zustand an die MME- bzw. AMF-Komponente weiterleitet; oder
der zweite AP die Nachricht von der MME- bzw. AMF-Komponente empfängt, wenn diese eine Downlink-Data-Notification vom AP erhält, die den Übergang des Geräts vom Idle-Zustand zurück in den aktiven Zustand anzeigt.

7. Ein Verfahren, aufweisend, an einem Zugangspunkt (110), AP, eines Netzwerks (100), wobei der AP dafür konfiguriert ist, einem Gerät (112) zellulare und Wi-Fi-Verbindungsfähigkeiten bereitzustellen:
(S400) Erzeugen einer Pseudo-MAC-Adresse für das Gerät, das bereits eine Wi-Fi-Verbindung zum Netzwerk aufgebaut hat und über den Zugangspunkt eine zellulare Verbindung zu einem Kernnetz (116) herstellen will, basierend auf einem eindeutigen Bezeichner des Geräts;
(S400) Empfangen einer IP-Adresse für das Gerät von einem DHCP-Server (107) eines DNA-Fabrics (102) des Netzwerks auf Grundlage der Pseudo-MAC-Adresse, wobei die IP-Adresse zur Mobilität des Geräts im Netzwerk verwendet wird;
(S404) Empfangen eines Sicherheitstags für das Gerät von einer ISE (108) des DNA-Fabrics, wobei der Sicherheitstag dazu dient, dem Gerät während der Nutzung der zellularen Verbindung eine oder mehrere Sicherheitskonfigurationen des Netzwerks zuzuweisen;
(S406) Aktualisieren eines Mapping-Servers (106) des DNA-Fabrics mit der IP-Adresse und/oder dem Sicherheitstag des Geräts; und
(S408) Verbinden des Geräts mit dem DNA-Fabric unter Verwendung der IP-Adresse, des Sicherheitstags und der zellularen Verbindung des Geräts und Gestatten des Roamings des Geräts über die zellulare Verbindung, während das DNA-Fabric seine Sicherheitsmaßnahmen auf das Gerät anwendet, wobei das DNA-Fabric Teil eines Unternehmensnetzes ist, das einen verteilten Datenbereich mit einer zentralisierten Steuerungsebene ermöglicht.

8. Das Verfahren nach Anspruch 7, ferner aufweisend:
Verwalten der Mobilität des Geräts im Netzwerk.

9. Das Verfahren nach Anspruch 8, ferner aufweisend:
Implementieren eines ersten oder eines zweiten Prozesses zum Verwalten der Mobilität des Geräts im Netzwerk, abhängig davon, ob sich das Gerät im aktiven Zustand oder im Idle-Zustand befindet.

10. Das Verfahren nach Anspruch 9, wobei, wenn sich das Gerät im aktiven Zustand befindet, der erste Prozess Folgendes umfasst:
Durchführen eines Handover-Prozesses, um das Gerät von einem Quell-AP auf einen Ziel-AP zu übergeben, wobei das Handover das Senden des Sicherheitstags vom Quell-AP an den Ziel-AP umfasst; und
Aktualisieren, durch den Ziel-AP, einer Komponente in einem Packet-Core eines zellularen Anbieters, der die zellulare Verbindung für das Gerät bereitstellt, um die Übergabe anzuzeigen,
wahlweise, wobei die Komponente im Packet Core entweder eine Mobility-Management-Entity-(300)-, MME-, oder eine Mobility-Management-Function-(326)-, AMF-, Komponente ist.

11. Verfahren nach Anspruch 9, wobei, wenn sich das Gerät im Idle-Zustand befindet, der zweite Prozess Folgendes aufweist:
Senden, durch einen ersten AP und an eine Komponente in einem Packet Core eines zellularen Anbieters, der die zellulare Verbindung für das Gerät bereitstellt - einer SI-Release-Nachricht, die die Pseudo-MAC-Adresse des Geräts, die IP-Adresse des Geräts und den Sicherheitstag des Geräts aufweist; und
Empfangen, durch einen zweiten AP und von der Komponente in dem Packet Core, einer Nachricht, die die Pseudo-MAC-Adresse des Geräts, die IP-Adresse des Geräts und den Sicherheitstag des Geräts aufweist, wobei
der erste AP ein AP ist, auf dem das Gerät vom aktiven Zustand in den Idle-Zustand überging, und
der zweite AP ein anderer AP ist, auf dem das Gerät vom Idle-Zustand zurück in den aktiven Zustand überging,
wahlweise, wobei die Komponente im Packet Core entweder eine Mobility-Management-Entity-(300)-, MME-, oder eine Mobility-Management-Function-(326)-, AMF-, Komponente ist.

12. Verfahren nach Anspruch 11, wobei:
der zweite AP die Nachricht von der Komponente im Packet Core empfängt, wenn der zweite AP eine Service-Request-Nachricht vom Gerät empfängt, nachdem das Gerät in den aktiven Zustand zurückgekehrt ist; oder
der zweite AP die Nachricht von der Komponente im Packet Core empfängt, wenn die Komponente im Packet Core eine Downlink-Data-Notification vom ersten AP empfängt, die den Übergang des Geräts vom Idle-Zustand zurück in den aktiven Zustand anzeigt.

13. Ein oder mehrere computerlesbare Medien, in denen computerlesbare Instruktionen gespeichert sind, die, wenn sie von einem oder mehreren Prozessoren ausgeführt werden, bewirken, dass die Prozessoren das Verfahren nach einem der Ansprüche 7 bis 12 ausführen.

## Revendications

1. Point d'accès (110), AP, d'un réseau (100), l'AP étant configuré pour fournir une connexion cellulaire et des capacités de connexion Wi-Fi pour un dispositif (112), et configuré pour :
générer (S400) une pseudo-adresse de contrôle d'accès au support, MAC, pour le dispositif qui a établi une connexion Wi-Fi avec le réseau et qui essaie d'établir une connexion cellulaire avec un réseau central (116) via le point d'accès, en se basant sur un unique identifiant du dispositif ;
obtenir (5400) d'un serveur de protocole de configuration d'hôte dynamique (107), DHCP, d'une structure (102) du réseau de l'architecture de réseau numérique, DNA, une adresse de protocole Internet, IP, pour le dispositif, en se basant sur la pseudo-adresse MAC, l'adresse IP étant utilisée pour suivre la mobilité du dispositif à travers le réseau ;
obtenir (S404) d'un moteur de service d'identité (108), ISE, de la structure DNA du réseau, une étiquette de sécurité pour le dispositif dans lequel l'étiquette de sécurité sert à appliquer au dispositif une ou plusieurs configurations de sécurité du réseau, alors que le dispositif est en cours d'utilisation de la connexion cellulaire ;
mettre à jour (S406) un serveur de mappage (106) de la structure DNA du réseau avec l'adresse IP et/ou avec l'étiquette pour le dispositif ; et
connecter (S408) le dispositif à la structure DNA du réseau, en utilisant l'adresse IP, l'étiquette de sécurité et la connexion cellulaire du dispositif, et pour permettre au dispositif de se déplacer sur le réseau en utilisant la connexion cellulaire, alors que la structure DNA met en œuvre ses mesures de sécurité sur le dispositif, point d'accès dans lequel la structure DNA fait partie d'un réseau d'entreprise qui permet un espace de données distribué avec un plan de contrôle centralisé.

2. Point d'accès selon la revendication 1, où le point d'accès est configuré pour intégrer dans le réseau un trafic cellulaire du dispositif.

3. Point d'accès selon l'une des revendications précédentes, configuré en outre pour gérer la mobilité du dispositif à travers le réseau, en se basant sur le fait de savoir si le dispositif se trouve dans un état actif ou dans un état inactif.

4. Point d'accès selon la revendication 3, dans lequel, lorsque le dispositif se trouve dans l'état actif, la gestion comprend le fait :
d'effectuer (5410) un processus de transfert pour transférer le dispositif depuis l'AP jusqu'à un AP de destination, le transfert comprenant l'envoi de l'étiquette de sécurité, de l'adresse IP et d'une adresse Ethernet du mobile depuis l'AP jusqu'à l'AP de destination ; et
de mettre à jour (S414) l'un ou l'une d'une entité de gestion de mobilité (300), MME, ou d'un composant de fonction de gestion de mobilité (326), AMF, ledit composant étant contenu dans un noyau de paquet cellulaire correspondant pour indiquer le transfert.

5. Point d'accès selon la revendication 3, dans lequel, lorsque le dispositif se trouve dans l'état inactif, la gestion comprend le fait :
d'envoyer (S424) à l'un ou l'une d'une entité de gestion de mobilité (300), MME, ou d'un composant de fonction de gestion de mobilité (326), AMF, contenu dans un noyau de paquet cellulaire correspondant, un message de libération S1 comprenant la pseudo-adresse MAC du dispositif, l'adresse IP du dispositif et l'étiquette de sécurité du dispositif, point d'accès dans lequel :
le message de libération S1 amène l'un ou l'une de la MME ou du composant AMF à envoyer (s430) un message à un deuxième AP, après que le dispositif soit revenu à l'état actif, ledit message comprenant la pseudo-adresse MAC du dispositif, l'adresse IP du dispositif et l'étiquette de sécurité du dispositif, et
l'AP est un AP sur lequel le dispositif est passé pour la dernière fois de l'état actif à l'état inactif, et le deuxième AP est un autre AP sur lequel le dispositif est repassé de l'état inactif à l'état actif.

6. système comprenant le point d'accès selon la revendication 5 et le deuxième AP, système dans lequel :
le deuxième AP est configuré pour recevoir (5430) le message provenant de l'un ou l'une de la MME ou du composant AMF, lorsque le deuxième AP reçoit (5426) une demande de service provenant du dispositif et qu'il transmet (5428) la demande de service à l'un ou l'une de la MME ou du composant AMF, après que le dispositif soit revenu à l'état actif ; ou bien
le deuxième AP est configuré pour recevoir le message provenant de l'un ou l'une de la MME ou du composant AMF, lorsque l'un ou l'une de la MME ou du composant AMF reçoit, en provenance de l'AP, une notification de données de liaison descendante, ladite notification étant indicative du fait que le dispositif repasse de l'état inactif à l'état actif.

7. Procédé comprenant, au niveau d'un point d'accès (110), AP, d'un réseau (100), le fait que l'AP est configuré pour fournir une connexion cellulaire et des capacités de connexion Wi-Fi pour un dispositif (112), et configuré pour :
générer (S400) une pseudo-adresse de contrôle d'accès au support, MAC, pour le dispositif qui a établi une connexion Wi-Fi avec le réseau et qui essaie d'établir une connexion cellulaire avec un réseau central (116) via le point d'accès, en se basant sur un unique identifiant du dispositif ;
obtenir (5400) d'un serveur de protocole de configuration d'hôte dynamique (107), DHCP, d'une structure (102) du réseau de l'architecture de réseau numérique, DNA, une adresse de protocole Internet, IP, pour le dispositif, en se basant sur la pseudo-adresse MAC, l'adresse IP étant utilisée pour suivre la mobilité du dispositif à travers le réseau ;
obtenir (S404) d'un moteur de service d'identité (108), ISE, de la structure DNA du réseau, une étiquette de sécurité pour le dispositif dans lequel l'étiquette de sécurité sert à appliquer au dispositif une ou plusieurs configurations de sécurité du réseau, alors que le dispositif est en cours d'utilisation de la connexion cellulaire ;
mettre à jour (S406) un serveur de mappage (106) de la structure DNA du réseau avec l'adresse IP et/ou avec l'étiquette pour le dispositif ; et
connecter (S408) le dispositif à la structure DNA du réseau, en utilisant l'adresse IP, l'étiquette de sécurité et la connexion cellulaire du dispositif, et pour permettre au dispositif de se déplacer sur le réseau en utilisant la connexion cellulaire, alors que la structure DNA met en œuvre ses mesures de sécurité sur le dispositif, procédé dans lequel la structure DNA fait partie d'un réseau d'entreprise qui permet un espace de données distribué avec un plan de contrôle centralisé.

8. Procédé selon la revendication 7, comprenant en outre :
la gestion de mobilité du dispositif à travers le réseau.

9. Procédé selon la revendication 8, comprenant en outre :
le fait de mettre en œuvre l'un ou l'autre d'un premier processus ou d'un second processus pour gérer la mobilité du dispositif à travers le réseau, en se basant sur le fait de savoir si le dispositif se trouve dans un état actif ou dans un état inactif.

10. Procédé selon la revendication 9, dans lequel, lorsque le dispositif se trouve dans l'état actif, le premier processus comprend le fait :
d'effectuer un processus de transfert pour transférer le dispositif depuis un AP source jusqu'à un AP de destination, le transfert comprenant l'envoi de l'étiquette de sécurité depuis l'AP source jusqu'à l'AP de destination ; et
de mettre à jour, par l'AP de destination, un composant contenu dans un noyau de paquet d'un fournisseur cellulaire fournissant la connexion cellulaire pour le dispositif afin d'indiquer le transfert,
éventuellement procédé dans lequel le composant contenu dans le noyau de paquet est l'un ou l'une d'une entité de gestion de mobilité (300), MME, ou d'un composant de fonction de gestion de mobilité (326), AMF.

11. Procédé selon la revendication 9, dans lequel, lorsque le dispositif se trouve dans l'état inactif, le second processus comprend le fait :
d'envoyer, par un premier AP et à un composant contenu dans un noyau de paquet d'un fournisseur cellulaire fournissant la connexion cellulaire pour le dispositif, un message de libération S1 comprenant la pseudo-adresse MAC du dispositif, l'adresse IP du dispositif et l'étiquette de sécurité du dispositif ; et
de recevoir, par un deuxième AP et en provenance du composant contenu dans un noyau de paquet, un message comprenant la pseudo-adresse MAC du dispositif, l'adresse IP du dispositif et l'étiquette de sécurité du dispositif, procédé dans lequel :
le premier AP est un AP sur lequel le dispositif est passé de l'état actif à l'état inactif, et le deuxième AP est un autre AP sur lequel le dispositif est repassé de l'état inactif à l'état actif,
éventuellement procédé dans lequel le composant contenu dans le noyau de paquet est l'un ou l'une d'une entité de gestion de mobilité (300), MME, ou d'un composant de fonction de gestion de mobilité (326), AMF.

12. Procédé selon la revendication 11, dans lequel :
le deuxième AP reçoit le message provenant du composant contenu dans le noyau de paquet, lorsque le deuxième AP reçoit une demande de service provenant du dispositif, après que le dispositif soit revenu à l'état actif ; ou bien
le deuxième AP reçoit le message provenant du composant contenu dans le noyau de paquet, lorsque le composant contenu dans le noyau de paquet reçoit, en provenance du premier AP, une notification de données de liaison descendante, ladite notification étant indicative du fait que le dispositif repasse de l'état inactif à l'état actif.

13. Un ou plusieurs supports lisibles par ordinateur, ledit support ou lesdits supports ayant des instructions - lisibles par ordinateur - qui y sont stockées, instructions qui, lorsqu'elles sont exécutées par un ou plusieurs processeurs, amènent le ou les processeurs à mettre en œuvre le procédé selon l'une quelconque des revendications 7 à 12.
